Europäisches Patentamt

European Patent Office

Office européen des brevets

(11) Numéro de publication: **0 435 703 A2**

## (12) DEMANDE DE BREVET EUROPEEN

(21) Numéro de dépôt: 90402905.5

(22) Date de dépôt: 16.10.90

(51) Int. Cl.5: **B26D 7/24**, F16P 3/00

(30) Priorité: 26.10.89 FR 8914033
25.01.90 FR 9000846

(43) Date de publication de la demande:
**03.07.91 Bulletin 91/27**

(84) Etats contractants désignés:
**AT BE CH DE ES GB IT LI LU NL SE**

(71) Demandeur: **Roy, Christian**
**125 Boulevard Saint Denis**
**F-92400 Courbevoie(FR)**

(72) Inventeur: **Roy, Christian**
**125 Boulevard Saint Denis**
**F-92400 Courbevoie(FR)**

(54) **Dispositif de sécurité destiné à contrôler la position des matériaux placés dans une presse à découpe.**

(57) La présente invention dénommée Dispositif de sécurité destinée à contrôler la position des matériaux de type porte-feuille concerne l'adaptation de palpeurs sensibles et réglables, repérant la position des matériaux à découper, à imprimer ou utilisé en sérigraphie associé à un circuit électronique anti-répétition, un asservissement de éléments de verin et une électronique de commande.

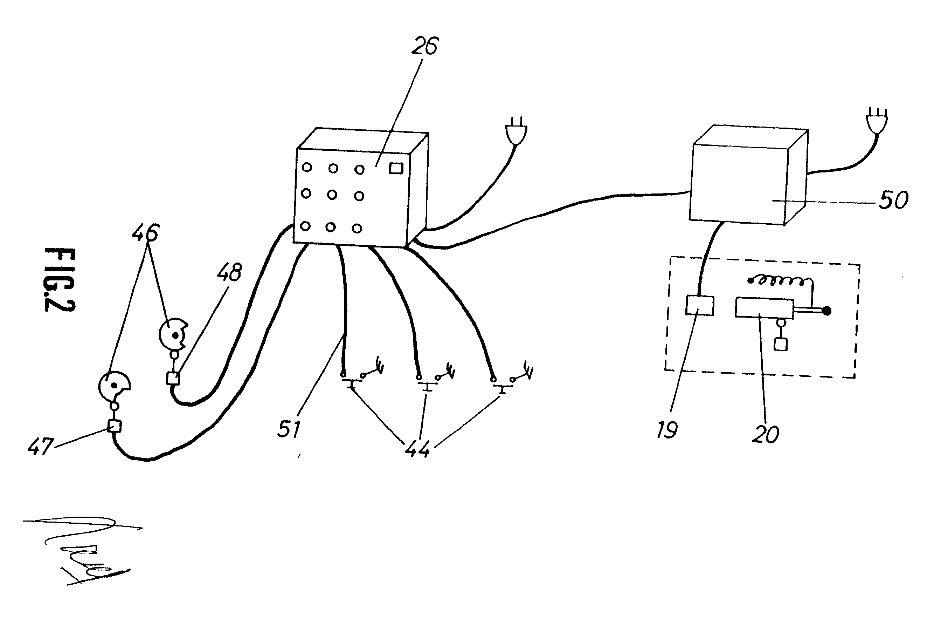

Selon la figure 2, l'invention est caractérisée par l'adaptation sur la platine (22) de la presse, de palpeurs réglables et sensibles (44) détectant la position des matériaux sur la surface de la platine.

Ces palpeurs agissent sur des relais électriques de commande (26) de la presse par l'intermédiaire d'une électronique (50) avec logiciel qui analyse les signaux. Cette électronique (50) pilotent les différents types de fonctionnement ergonomiques de la presse et assurent la sécurité des utilisateurs.

L'invention est utilisée dans l'industrie du cartonnage, de l'emballage et de la sérigraphie.

FIG.2

L'invention, objet du présent dépôt, concerne l'adaptation sur une presse à découpe, de palpeurs sensibles à la pression qui détectent la présence et la position des matériaux (cartonnage, plastique, etc.) soumis au découpage et d'une électronique de commande avec sécurité.

On distingue actuellement 3 familles de presses à découper de type portefeuille.

1/ Celles à embrayage-frein mécanique actionnées avec une pédale ou une barre qui provoque le fonctionnement des mâchoires de la presse. Le fonctionnement est continu ou discontinu; les matériaux sont placés manuellement par l'opérateur.

2/ Celles à embrayage-frein électromécanique ou électropneumatique. Le fonctionnment est continu, discontinu ou temporisé (le plateau inférieur s'arrête pour une durée définie par l'opérateur). Les produits sont placés manuellement.

3/ Celles à embrayage-frein électromécanique ou électropneumatique actionnées par une commande électronique constitués par un bouton poussoir. Elles sont accouplées à un robot qui dispose automatiquement les matériaux dans les mâchoires de la presse. Leur marche est continue.

Toutes ces presses présentent de nombreux inconvénients et notamment :

- Un travail pénible pour l'ouvrier qui actionne pour les deux premières familles une pédale au pied (position non ergonomique),

- L'arrêt d'urgence obtenu généralement par une barre auxiliaire, n'est pas immédiat,

- Les commandes des mâchoires au moyen de boutons poussoirs peuvent entrainer des déclenchements intempestifs de la presse,

- Un élément étranger à la fabrication (outil, matériaux, etc.) introduit fortuitement entre les mâchoires de la presse provoque des dégats matériels,

- Un placement défectueux des matériaux soumis à la découpe de la presse provoque une perte importante de matière première,

- Les risques d'accidents pour l'opérateur qui corrige entre deux battements le positionnement des matériaux sont fréquents,

- La synchronisation du bon placement des matériaux entre les mâchoires de la presse et le fonctionnement de celle-ci est difficile, limitant l'automatisation complète de l'ensemble.

La présente invention permet de pallier à ces inconvénients :

- en repérant au moyen de palpeurs l'absence ou le mauvais positionnement du cartonnage ou de la matière à découper,

- en stoppant l'ensemble de la presse quand un corps étranger se loge entre ses mâchoires. Ces palpeurs dotés d'une amplification électronique et d'un logiciel commandent le circuit électrique de la presse, ce dernier est doté d'un circuit anti-répétition de commande de cycle. Cette dernière disposition élimine tout déclenchement intempestif.

Enfin, lorsque les presses sont asservies par un verin pneumatique ou électropneumatique, elles peuvent être automatisées par un robot sans risque d'accident ou de malfaçon.

Ainsi l'invention dénommée : "Dispositif de sécurité destiné à contrôler la position des matériaux placés sous une presse à découpe" est caractérisée en ce qu'elle com porte un circuit électrique temporisateur, des palpeurs réglables commandant un logiciel, un circuit anti répétition de commande de cycle, un asservissement par verin pneumatique ou électromagnétique, un panneau de raccordement des relais, un asservissement de la rotation du moteur entrainant la presse, des relais de commandes de fonctionnement reliés au détecteur de défauts.

L'invention sera mieux comprise grâce aux figures annexées qui ne sont présentées qu'à titre d'exemples non limitatifs réalisées par l'homme de l'Art.

Les circuits électriques sont présentés pour être connectés à tous les types de presse en éliminant les fonctions redondantes.

- La figure 1 représente le schéma de la presse de découpe dans son ensemble,
- La figure 2 représente le cablage des fonctions annexées à la presse de découpe,
- La figure 3 représente le circuit d'amplification relié aux palpeurs et le circuit anti-répétitif de commande de cycle,
- La figure 4 représente le schéma de raccordement général,
- La figure 5 représente le palpeur spécifique démonté,
- La figure 6 représente le palpeur en état de fonctio nnement,
- La figure 7 représente le tableau des commandes et de visualisations de l'ensemble du dispositif.

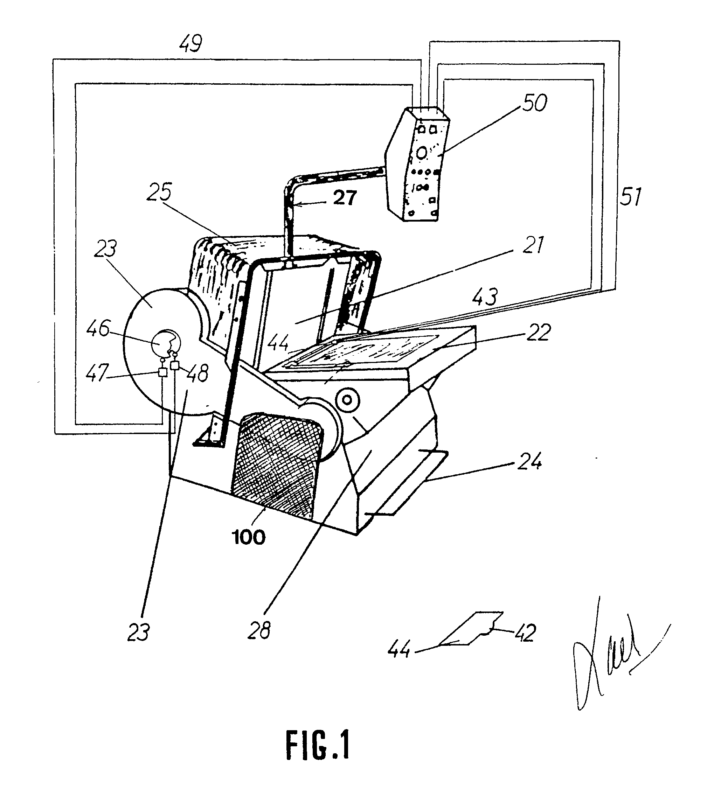

On a représenté sur la figure 1, l'aménagement général, les dispositions revendiquées adaptables sur une presse à découpe, sur un dispositif d'impression ou sur toute machine nécessitant une précision de positionnement des matériaux à traiter ou à façonner.

Dans notre exemple la presse de découpe est constituée de deux plateaux : l'un fixe (21) et l'autre mobile (22) qui reliés à un bras (23) se referme à la façon d'une mâchoire. Le mouvement de la presse est obtenu au moyen d'un moteur agissant sur une commande pneumatique ou électro-pneumatique. A l'une des extrèmités de l'arbre d'entrainement on a fixé deux excentrés (46) tournant à la fréquence de battement de la presse. Ces deux excentrés agissent sur deux contacteurs (47) et (48). Si le freinage est défectueux les excentrés agissent par impulsions électriques issues des contacteurs (47) et (48) pour informer la mémoire électronique (50) d'un défaut de fonctionnement.

Sur la platine (22) on a placé des cales (44) sur lesquelles sont placées les palpeurs (42) qui limitent et définissent le bon placement des matériaux. En cas de défaut de placement, ces palpeurs informent la mémoire de l'électronique (50) par le conducteur (51). L'électronique comptabilise la fréquence de fontionnement de la presse et le nombre de matériaux traités placés sur la platine (21).

Le mécanisme de commande de cycle de la presse peut être obtenu par deux boutons poussoirs qui agissent sur le circuit pneumatique.

Une grille de protection (25) mobile s'abaisse à la fréquence de la presse et interdit l'accès de l'opérateur au cours du serrage des deux plateaux.

Le boitier de commande électrique (50) est monté sur une potence (27) qui en tournant arrête le fonctionnement de la presse.

Lorsque le plateau (22) s'élève le mécanisme mobile placé sous le plateau (21) est isolé de l'extérieur par un soufflet (28) qui joue le rôle de protecteur; en outre sur les flancs de la machine les grilles de protection (100) isolent l'opérateur des axes en mouvement. La pédale (24) est utilisée pour les arrêts d'urgence.

La figure 2 représente le principe général du cablage adapté à tous les types de presses de découpe. L'électronique est composée des boitiers (26) et (50) renfermant le circuit temporisateur, l'alimentation électrique, un logiciel, les contacteurs électriques et les micro-contacts. Les palpeurs (44) diposés sur la presse à découpe sont connectés au boitier (26). Les cames (46) placées au bout de l'axe du moteur agissent sur les contacteurs (48) et (47) informant le boitier de commande par des impulsions électriques. Celles-ci alimentent un compteur de tours signalant la cadence de fontionnement de la presse. Le verin électro- pneumatique (20) servant à commander par à-coup la presse agit sur une électrovanne (19) pilotée par un relais du boitier de raccordement (50)

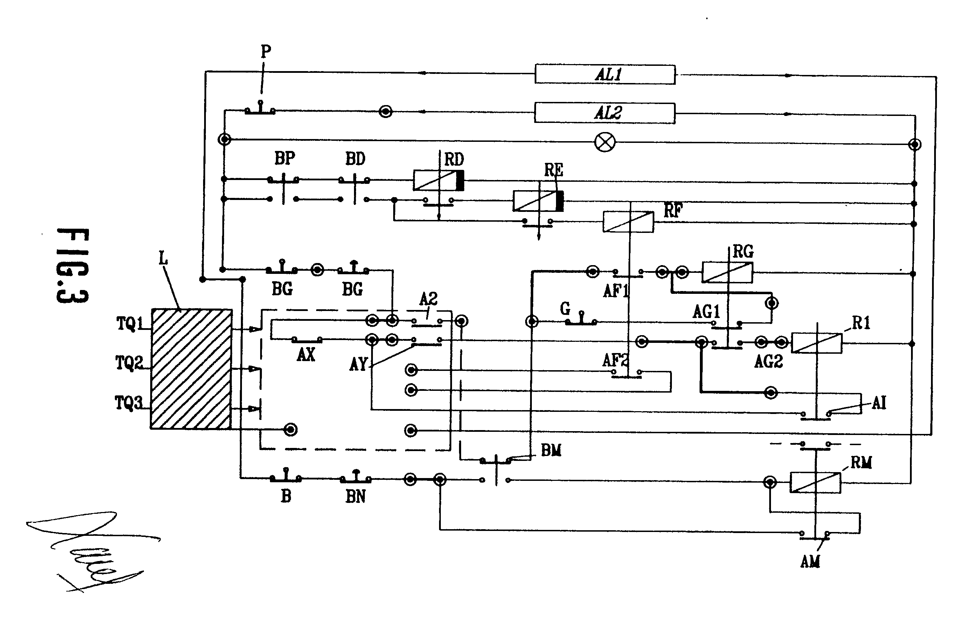

On a représenté à la figure 3 le schéma électrique du circuit anti-répétitif associé au circuit comprenant notamment les palpeurs. Ce circuit est alimenté en courant par deux alimentations AL1 fournissant la tension nécessaire pour le fonctionnement du moteur et de ses accessoires et AL2 assurant une basse tension de 24 volts, par exemple destinée à l'électronique. Le voyant lumineux V indique sur le boitier 26 la mise sous tension. Le micro contact P coupe le circuit d'électronique sous l'effet de la rotation de la potence. Les boutons poussoirs BD et BP correspondent à la mise en marche de l'embrayage du moteur dont l'effet est temporisé par le relais RD placé en série. Lorsque ces boutons BD et BP sont enfoncés ils actionnent les relais en série RE et RF temporisés qui agissent sur la mise en marche de l'ensemble au moyen des contacts AF1 et AF2. Le relais RG actionne les contacts AG1 et AG2 qui commandent la marche de l'électronique branchée sur le circuit 24 volts. Le relais RM commande le relais de l'arrêt du moteur et excite le relais R1 lorsque l'électrovannne est en position de marche au niveau AF1. Ce circuit est commandé par les contacts AX AY et A2 de mise en route de l'électronique, elle-même pilotée par le logiciel L. Ce logiciel L est relié d'une part au circuit d'alimentation de l'ensemble et d'autre part aux palpeurs ou taquets TQ1 TQ2 TQ3 (index 44 sur la figure 2) et placé sur la platine (22) de la presse. Les boutons poussoirs BG commandent l'embrayage du moteur tandis que le contact G branché sur le circuit électrique des verins permettent de connecter l'alimentation du moteur au niveau de l'interrupteur représenté par le bouton poussoir BM.

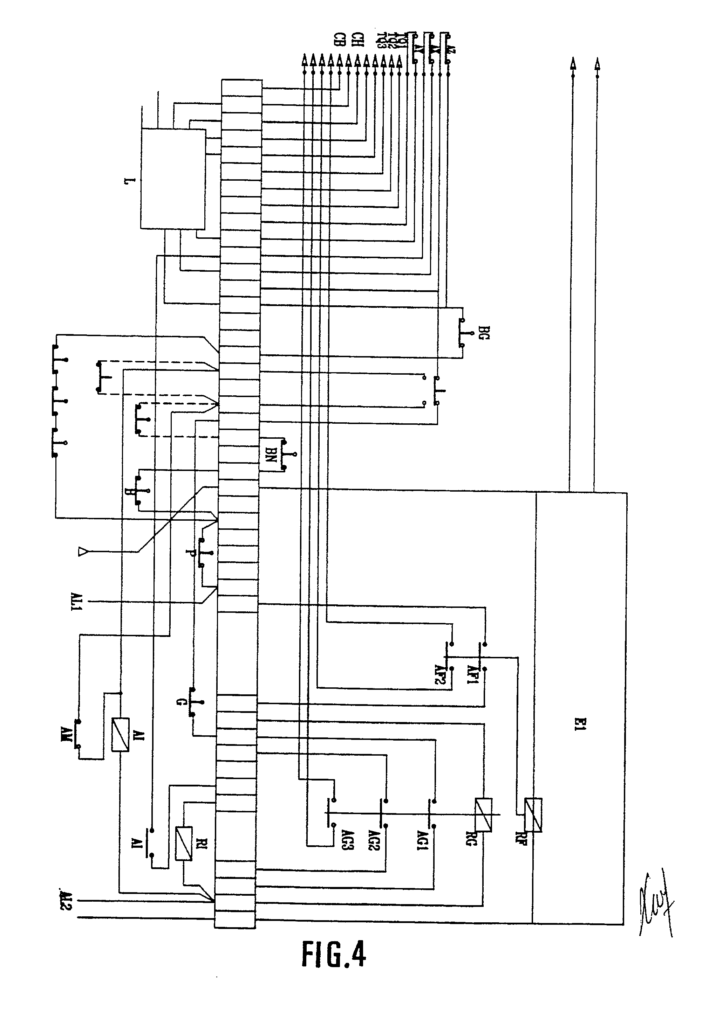

On a représenté sur la figure 4, le plan de raccordement appliqué complétant la figure 3.

Le panneau E1 représente une partie du circuit anti répétitif décrit à la figure 3 et placé dans l'armoire (50) de la figure 2. Ce circuit E1 est alimenté sous une tension de 24 volts alternatifs qui sera redressée par une alimentation interne. Le relais RF issu du circuit E1 commande les micro-contacts AF1 AF2 assurant ainsi l'alimentation de l'ensemble. Le relais RG agit sur les micro-contacts AG1 AG2 AG3 alimentant le circuit extérieur lorsque le relais électronique RI est excité par le micro-contact AI sur le verin. L'alimentation générale est assurée au niveau AL1 et AL2 qui peut être coupée par les micro-contacts A1 AM ou les boutons poussoirs P, B, BN, BG. Le bouton poussoir P est placé sur le circuit d'orientation de la potence, B constitue la clé de contact, BN commande l'arrêt du moteur et BG l'embrayage de ce dernier. La rupture de l'alimentation électrique du moteur est fournie par le relais RM associé au micro-contact AM branché sur le circuit général permettent de commander le fonctionnement de la presse. Les boutons poussoirs BN BG BM commandent le fonctionnement du circuit d'alimentation du moteur. Ces différentes commandes sont pilotées par un logiciel qui relie les palpeurs TQ1 TQ2 TQ3 et la position des cames CH CB et qui traite les informations issues de ces senseurs et pilote l'alimentation électrique générale.

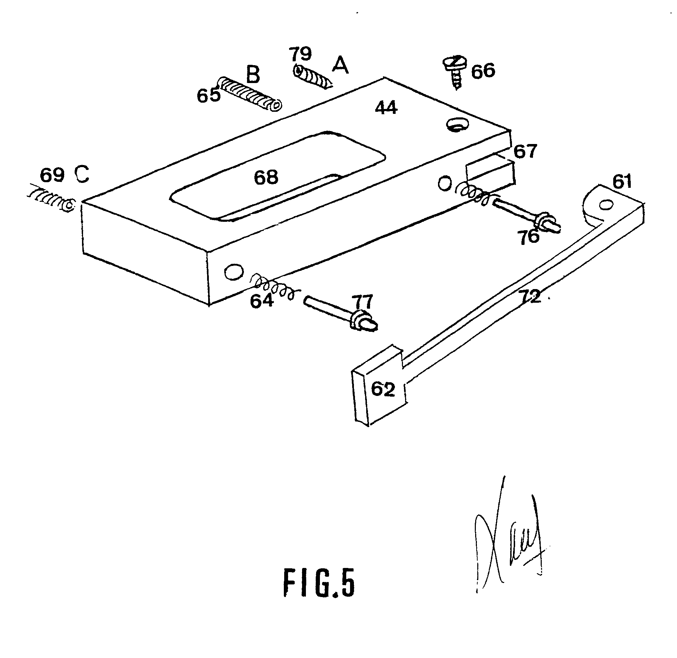

En se reportant à la figure 5, on a représenté un palpeur (44) démonté. Ce dernier est composé d'une plaquette métallique composant un aimant permanent à deux faces (68) dont la partie centrale est évidée. L'épaisseur de ce palpeur est de 6 mm sa longueur de 48 mm et sa largeur de 20 mm dans l'exemple choisi. Cet encombrement a été préféré pour éviter qu'il gène dans le fontionnement de la presse sur laquelle il est fixé. Une tige (72) elle-même féromagnétique s'emboîte au niveau (61) dans une gorge (67) usinée à l'une des extrémités de la plaquette (44). Cette tige (72) pivote dans cette gorge où elle est retenue au moyen d'une vis (66) qui joue le rôle de pivot. Le réglage de l'amplitude de rotation de la tige (72) est obtenue au moyen d'une vis (79) qui traverse la largeur de la plaquette (44) pour servir de butée à la tige (72) au niveau (61). Les plots (A et B) d'arrivée du courant électrique utilisés pour asservir le mécanisme de la presse sont constitués de deux boulons réglables agissant sur deux tiges (65 et 69) elles-mêmes traversant la largeur de la plaquette (44) pour émerger au niveau de la tige (72). le boulon B et la tige filetée (65) permettent de régler la hauteur d'émergence du contact (76) et par voie de conséquence de régler l'amplitude de rotation de la tige (72) et la sensibilité du palpeur. Le boulon C et la tige filetée (69) permettent de régler la hauteur d'émergence du contact (77) et par voie de conséquence régler la pression du palpeur au niveau des contacts (77) et (61). Lorsque la tige (72) se referme sur les contacts (77) et (76) sous l'effet de la pression d'un matériau placé sous une presse, le contact électrique s'établit entre les plots A et B et le courant commandant l'asservissement de la prese ou tout autre dispositif de repérage et de sécurité fonctionne avec la précision du réglage décrit.

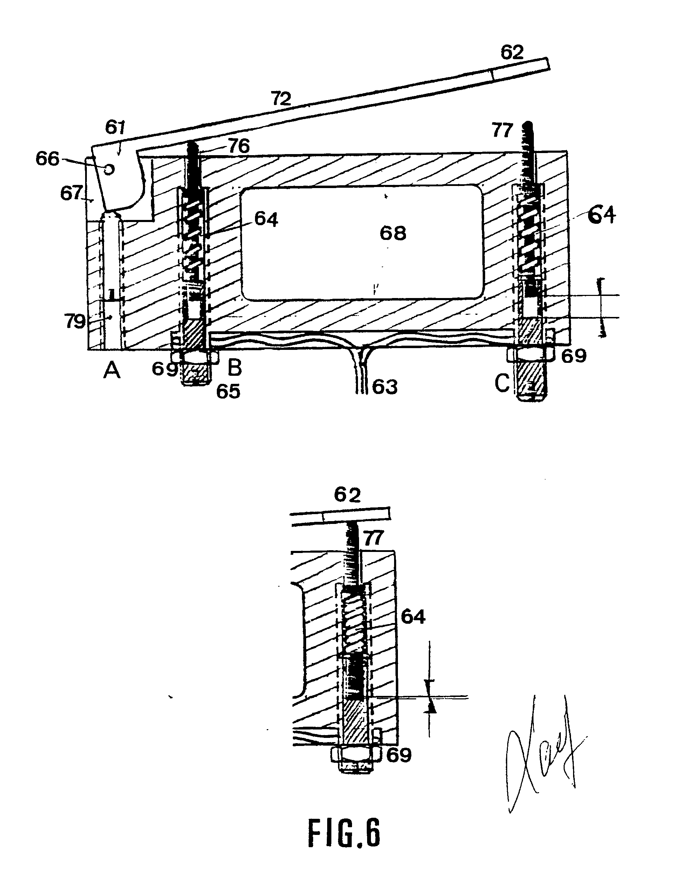

On a représenté sur la figure 6 vu en coupe le palpeur en état de fonctionnement. Ce dernier est constitué par une plaquette (44) constituant dans sa partie évidée un aimant permanent (68) dont les faces nord et sud sont face à face. La tige (72) constituant le contact électrique est elle-même en matériaux aimantables. Cette tige (72) se loge dans une gorge (67) usinée à l'extrémité de la plaquette (44). La tige (72) tourne autour d'un axe vissé (66) au niveau de son extrèmité (61) constituant ainsi une charnière. Le réglage de l'amplitude de la tige (72) est obtenu par une butée (79) que l'on commande au moyen d'une vis A qui s'éfface dans la plaquette (44). Le plot B est un boulon réglé par la vis (65) dont le serrage permet de régler l'émergence d'un tige (76) montée sur un ressort (64) qui limite la hauteur d'amplitude de la tige (72) et par voie de conséquence règle la sensibilité du palpeur aux pressions des matériaux. La borne C est un second boulon dont la tige filetée (69) règle l'émergence de la tige (77) montée sur un ressort doux (64). La hauteur d'émergence permet de régler la pression du palpeur par l'amplitude nécessaire pour créer le contact avec la tige (72). Le contact de la tige émergente (77) et celle de la tige (72) se réalise au niveau (62). Le circuit électrique branché entre les points B et C se referment au travers de la tige (72) quand celle-ci s'incline sous la pression des matériaux agissant sur le palpeur. Selon cette pression, on règle la sensibilité au moyen du boulon B et de la tige (65), et la pression au moyen du boulon A et de la tige (69).

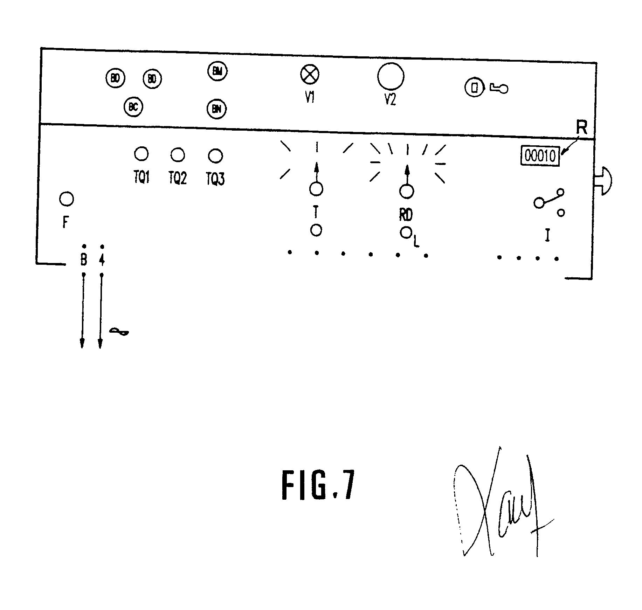

On a représenté sur la figure 7, le panneau de commande de la presse. Sur ce panneau on retrouve les boutons BD et BG actionnant le fonctionnement de l'embrayage du moteur BM et BN assurant la mise en route du moteur, les voyants lumineux V1 et V2 informant l'opérateur de l'alimentation électrique et électronique du circuit. Le contacteur T permet de régler le type de marche choisie de la presse et RD de régler la temporisation du circuit. R représente le compteur branché directement sur les cames et indiquent le nombre de coups effectués par la presse. F est le voyant lumineux indiquant la bonne marche du frein du moteur.

## Revendications

1 : L'invention objet du présent dépôt dénommée : " Nouveau dispositif de sécurité destiné à contrôler la position des matériaux placés dans une presse à découpe", est caractérisée en ce qu'elle comporte un circuit électrique temporisateur, des palpeurs réglables commandant un logiciel, un circuit anti-répétition de commande de cycle, un asservissement pneumatique ou électro-pneumatique, un panneau de raccordement de relais, un asservissement de la rotation du moteur, des relais de commande de fonctionnement reliés au détecteur de défauts.

2 : Nouveau dispositif de sécurité destiné à contrôler la position des matériaux placés dans une presse à découpe, selon la revendication 1 caractérisé en ce que l'effet de la mise en marche de l'électronique de commande obtenue en appuyant sur les boutons poussoirs BD et BP est temporisé au moyen des relais RD et RE branchés sur le circuit de commande de l'électronique.

3 : Nouveau dispositif de sécurité destiné à contrôler la position des matériaux placés dans une presse à découpe selon la revendication 1 caractérisé en ce que la neutralisation de la commande de l'électronique est obtenue au moyen d'un contact A2 associé au relais RG qui commande l'alimentation 24 volts.

4 : Nouveau dispositif de sécurité destiné à contrôler la position des matériaux placés dans une presse à découpe selon la revendication 1 caractérisé en ce que l'embrayage du moteur de la presse est contrôlé au moyen d'un relais R1 agissant sur un contacteur AI connecté sur le circuit de commande de l'alimentation du moteur.

5 : Nouveau dispositif de sécurité destiné à contrôler la position des matériaux placés dans une presse à découpe selon la revendication 1 caractérisé en ce que la bonne position de ces matériaux est détectée au moyen de palpeurs 44 connectés à la commande électronique par l'intermédiaire d'un logiciel L.

6 : Nouveau dispositif de sécurité destiné à contrôler la position des matériaux placés dans une presse à découpe selon la revendication 1 caractérisé en ce que le moyen d'informer l'opérateur de la fréquence de rotation de la presse, de sa position (ouverte ou fermée) et du nombre de battements effectués, est obtenu au moyen de cames (46) branchés sur l'arbre du moteur agissant sur des contacteurs (47 et 48) dont les impulsions électriques commandent un compteur de tours R.

7 : Nouveau dispositif de sécurité destiné à contrôler la position des matériaux placés dans une presse à découpe selon la revendication 1, caractérisé en ce que le contrôle de freinage du moteur est obtenu au moyen d'un rupteur G enregistrant la force du freinage au niveau d'un verin.

8 : Nouveau dispositif de sécurité destiné à contrôler la position des matériaux placés dans une presse à découpe selon la revendication 1, caractérisé en ce que le circuit électrique commandant le fonctionnement du moteur peut être interrompu d'urgence au moyen des rupteurs BM, BN, G, B, branchés en série et accessibles à l'opérateur.

9 : Nouveau dispositif de sécurité destiné à contrôler la position des matériaux placés dans une presse à découpe selon la revendication 1 caractérisé en ce que la sensibilité des palpeurs 44 aux matériaux placés sur la presse est obtenu au moyen de plusieurs palpeurs fixés sur la platine de la presse délimitant la frontière des matériaux. La tige du palpeur (72) pivotable autour d'une vis (66) à son amplitude de rotation réglable au moyen d'une tige (65) qui se visse pour émerger au niveau de la tige (72).

10 : Nouveau dispositif de sécurité destiné à contrôler la position des matériaux placés dans une presse à découpe selon la revendication 1, caractérisé en ce que la pression des palpeurs délimitant les matériaux placés sur la platine est obtenue au moyen de différents palpeurs (44) ferromagnétiques, dont la tige (72) du palpeur pivote autour d'une vis (66) et son amplitude est réglée par une vis (79) solidaire du corps du palpeur placé au niveau extrême de ce dernier, dans la gorge (67), une autre tige filetée (69) permet de régler l'émergence du contact (77) au niveau (61) de la tige (72) et d'obtenir une parfaite précision.

11 : Nouveau dispositif de sécurité destiné à contrôler la position des matériaux placés dans une presse à découpe selon la revendication 1 caractérisé en ce que l'asservissement et la commande de l'ensemble et sa sécurité sont obtenus au moyen d'un courant électrique continu qui est connecté au niveau B et C des palpeurs branchés en série, le champ électrique étant refermé par la tige (72) lorsque celle-ci sous l'effet de la pression des matériaux se plaque sur les tiges (77) et (76) elles-mêmes reliées aux vis de réglage (65) et (69) et aux plots B et C.

12 : Nouveau dispositif de sécurité destiné à contrôler la position des matériaux placés dans une presse à découpe selon la revendication 1, caractérisé en ce que la presse peut fonctionner en toute sécurité au moyen des palpeurs (44) délimitant la position des matériaux et dont la sensibilité et la précision sont parfaitement réglées, diminuant les risques de fonctionnement en présence de corps étrangers.

13 : Nouveau dispositif de sécurité destiné à contrôler la position des matériaux placés dans une presse à découpe selon la revendication 1, caractérisé en ce que la fiabilité du repérage des matériaux et la cadence de fonctionnement peuvent être obtenus au moyen de palpeurs (44) branchés en série dont la sensibilité et la précision sont réglées par l'opérateur à son rythme de travail au moyen des vis (65) et (69) facilement accessibles, constituant une ergonomie de fonctionnement de la presse.

14 : Nouveau dispositif de sécurité destiné à contrôler la position des matériaux placés dans une presse à découpe selon la revendication 1, caractérisé en ce que le fonctionnement à vide de la presse ne peut être réalisé, avec comme conséquence l'usure excessive des presses, au moyen des palpeurs (44) dont la sensibilité et la précision sont réglables en fonction de présence de matériaux, ces palpeurs branchés en série sur le circuit de commande de la presse au niveau des bornes A et B ne déclenchent le fonctionnement de l'ensemble qu'au moment où ils assurent la continuité du courant électrique de commande.

**FIG.1**

FIG.2

FIG.3

FIG.4

FIG.5

FIG.6

FIG.7